# EUROPÄISCHE PATENTSCHRIFT

(11) **EP 3 661 831 B1**
(45) Veröffentlichungstag und Bekanntmachung des Hinweises auf die Patenterteilung: **07.09.2022**
(21) Anmeldenummer: 18732028.8
(22) Anmeldetag: 14.06.2018
(51) Int. Cl.: B62B 9/22

(54) **KINDERWAGEN MIT EINER ELEKTRISCHEN ANTRIEBSEINHEIT**
STROLLER WITH ELECTRIC DRIVE UNIT
POUSSETTE COMPRENANT UNE UNITÉ D'ENTRAÎNEMENT ÉLECTRIQUE

(30) Priorität: 02.08.2017 DE 102017213345
(43) Veröffentlichungstag der Anmeldung: 10.06.2020
(73) Patentinhaber: Robert Bosch GmbH, 70442 Stuttgart (DE)
(72) Erfinder: STEWING, Felix, 71711 Steinheim (DE); PLUM, Thomas, 50937 Koeln (DE)
(86) Internationale Anmeldenummer: PCT/EP2018/065795
(87) Internationale Veröffentlichungsnummer: WO 2019/025068

(56) Entgegenhaltungen:
- WO-A1-2017/029603
- WO-A2-2014/070008
- DE-A1- 3 437 298
- US-A1- 2014 144 346

## Beschreibung

### Stand der Technik

Die vorliegende Erfindung betrifft einen Kinderwagen mit einem Untergestell, auf dem eine Liege- oder Sitzwanne für ein Kind angeordnet ist, und mit mindestens drei an dem Untergestell angeordneten Rädern, wobei zumindest ein Rad mittels einer elektrischen Antriebseinheit zur zumindest teilweisen Unterstützung eines manuellen Schiebebetriebs des Kinderwagens durch einen Benutzer antreibbar ist, und wobei die elektrische Antriebseinheit mittels einer Bedieneinheit kontrollierbar ist.

Aus dem Stand der Technik sind unmotorisierte Kinderwagen und Buggys bzw. Sportkarren bekannt, sowie elektrisch motorisierte Kinderwagen und Buggys bzw. Sportkarren, bei denen ein Benutzer beim Schieben zumindest teilweise von mindestens einer elektrischen Antriebseinheit unterstützt wird. Zum anwendungsgerechten Steuern und/oder Regeln der von der elektrischen Antriebseinheit abrufbaren (Zusatz-)Antriebsenergie, verfügen solche elektrisch motorisierten Kinderwagen über einen manuellen Hebelgriff, d.h. einen so genannten "Gasgriff".

Ferner offenbart die US2014/0144346A1 eine selbst-angetriebene Babyschale zur Beruhigung eines Kindes. Die WO2014/070008A2 und die WO2017/029603 offenbaren eine Wiegefunktion für Kinderwagen.

### Offenbarung der Erfindung

Die vorliegende Erfindung gemäß Anspruch 1 betrifft einen Kinderwagen mit einem Untergestell, auf dem eine Liege- oder Sitzwanne für ein Kind angeordnet ist, und mit mindestens drei an dem Untergestell angeordneten Rädern, wobei zumindest ein Rad mittels einer elektrischen Antriebseinheit zur zumindest teilweisen Unterstützung eines manuellen Schiebebetriebs des Kinderwagens durch einen Benutzer antreibbar ist, und wobei die elektrische Antriebseinheit mittels einer Bedieneinheit kontrollierbar ist. Eine elektrische Wiege- und Rütteleinheit ist zum Sedieren und zum Wachrütteln eines in der Liege- oder Sitzwanne aufgenommenen Kindes in Abhängigkeit von Sensordaten mindestens eines zugeordneten Sensors ausgebildet.

Hierdurch ist im Vergleich zu einem herkömmlichen Kinderwagen keine ständige manuelle Bewegung mehr durch den Benutzer zur Beruhigung eines darin liegenden Kindes notwendig. Darüber hinaus eröffnen sich vollkommen neue Funktionalitäten, wie zum Beispiel ein effektiver Schutz gegen den sogenannten "plötzlichen Kindstod".

Bevorzugt sind zumindest einem Rad mindestens ein Bewegungssensor sowie eine Funkeinheit zugeordnet. Hierdurch ist ein besonders robuster und kompakter Aufbau des Kinderwagens bei minimalem Verkabelungsaufwand gegeben. Darüber hinaus sind aufgrund dieses modularen Aufbaus keine gravierenden konstruktiven Änderungen an bereits vorhandenen Kinderwagenkonstruktionen notwendig.

Gemäß einer bevorzugten Ausgestaltung ist die mindestens eine Funkeinheit zur bidirektionalen Kommunikation mit der Bedieneinheit ausgebildet, um zwischen der Bedieneinheit und der elektrischen Antriebseinheit zumindest eine Übertragung von Stellbefehlen und zwischen dem mindestens einen Bewegungssensor und der Bedieneinheit zumindest eine Übertragung von Sensordaten zu ermöglichen. Infolgedessen ist eine zentrale Steuerung des Kinderwagens mittels der Bedieneinheit möglich.

Bevorzugt weisen mindestens zwei Räder einer Vorderachse und/oder einer Hinterachse jeweils eine zugeordnete elektrische Antriebseinheit und mindestens einen Bewegungssensor sowie eine Funkeinheit auf. Hierdurch ist eine symmetrische Wirkung der elektrischen Antriebseinheiten auf den Kinderwagen sichergestellt.

Bei einer weiteren Ausbildung des Kinderwagens ist der mindestens eine zugeordnete Sensor ein Bewegungssensor. Infolgedessen ist eine weitgehend störungsfreie Detektion von etwaigen Bewegungen des im Kinderwagen liegenden Kindes möglich. Der Bewegungssensor kann hierbei als ein linearer Beschleunigungssensor oder als ein Drehbeschleunigungssensor ausgeführt sein.

Gemäß einer weiteren Ausgestaltung sind mittels des mindestens einen zugeordneten Sensors Bewegungen eines in der Liege- oder Sitzwanne aufgenommenen Kindes detektierbar und der Kinderwagen ist beim Überschreiten eines vorgegebenen Bewegungsgrenzwerts mittels der elektrischen Wiege- und Rütteleinheit in eine harmonische Wiegebewegung versetzbar. Hierdurch lässt sich das Kind automatisch beruhigen, d.h. ein Einschlafen erreichen oder ein Aufwachen verhindern.

Unter einer harmonischen Wiegebewegung sind im Kontext der vorliegenden Anmeldung insbesondere niederfrequente sinusförmige Schaukelbewegungen mit vergleichsweise kleiner Amplitude in einer Längs- und/oder einer Querrichtung der Liege- oder Sitzwanne des Kinderwagens zu verstehen. Eine Rüttelbewegung ist hingegen eine höherfrequente oberwellenhaltigere Schwingungsbewegung mit größerer Amplitude entlang der Längs- und/oder der Querrichtung der Liege- oder Sitzwanne des Kinderwagens. Gegebenenfalls kann die Rüttelbewegung auch senkrecht zur Liege- oder Sitzwanne des Kinderwagens erfolgen.

Bevorzugt sind mittels einer elektronischen Kamera Bewegungen eines in der Liege- oder Sitzwanne aufgenommenen Kindes optisch erkennbar und der Kinderwagen ist beim Überschreiten eines vorgegebenen Bewegungsgrenzwerts mittels der elektrischen Wiege- und Rütteleinheit in eine harmonische Wiegebewegung versetzbar. Infolgedessen lässt sich ebenfalls ein Aufwachen des Kindes verhindern oder dessen Wiedereinschlafen fördern.

Gemäß einer technisch vorteilhaften Weiterbildung ist mindestens ein zugeordneter Sensor ein im Bereich der Liege- oder Sitzwanne positionierter Gassensor. Hierdurch kann zum Beispiel die Konzentration von gesundheitsschädlichen Atemgasen im Bereich des Kindes erfasst werden.

Bei einer weiteren Ausgestaltung ist mittels des Gassensors eine Kohlendioxidkonzentration im Bereich der Liege- oder Sitzwanne erfassbar und der Kinderwagen ist beim Erfassen eines vorgegebenen Verlaufs der Kohlendioxidkonzentration mittels der elektrischen Wiege- und Rütteleinheit in eine periodische Rüttelbewegung versetzbar. Aufgrund der solchermaßen realisierten Atmungsüberwachung des Kindes kann das Risiko für den so genannten "plötzlichen Kindstod" des Kindes zumindest vermindert werden. Im Fall eines Atmungsversagens des Kindes bleibt die Kohlendioxidkonzentration zumindest im Wesentlichen konstant.

Nach Maßgabe einer Weiterbildung des Kinderwagens ist die Bedieneinheit ein Smartphone. Infolgedessen können eine separate Bedieneinheit und ein zusätzliches elektronisches Steuergerät am Kinderwagen entfallen, da stattdessen ein ohnehin vorhandenes Smartphone einsetzbar ist. Mittels einer App können sämtliche Funktionen des Kinderwagens zentral und intuitiv von dem Benutzer kontrolliert werden.

Bei einer weiteren vorteilhaften Ausgestaltung ist eine harmonische Wiegebewegung durch eine periodische Drehrichtungsumkehr im Bereich einer Eigenfrequenz des Kinderwagens mittels der elektrischen Wiege- und Rütteleinheit erzeugbar. Hierdurch ist die Erzeugung hoher Wiegeamplituden bei einem zugleich geringen Energieeinsatz zur Gewährleistung langer Akkulaufzeiten möglich.

Vorzugweise bildet die elektrische Antriebseinheit die elektrische Wiege- und Rütteleinheit aus. Hierdurch kann ein einfacher und kostengünstiger Aufbau des erfindungsgemäßen Kinderwagens ermöglicht werden.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine Seitenansicht eines beispielhaften Kinderwagens, und
- Fig. 2: eine Draufsicht auf eine Hinterachse des Kinderwagens von Fig. 1.

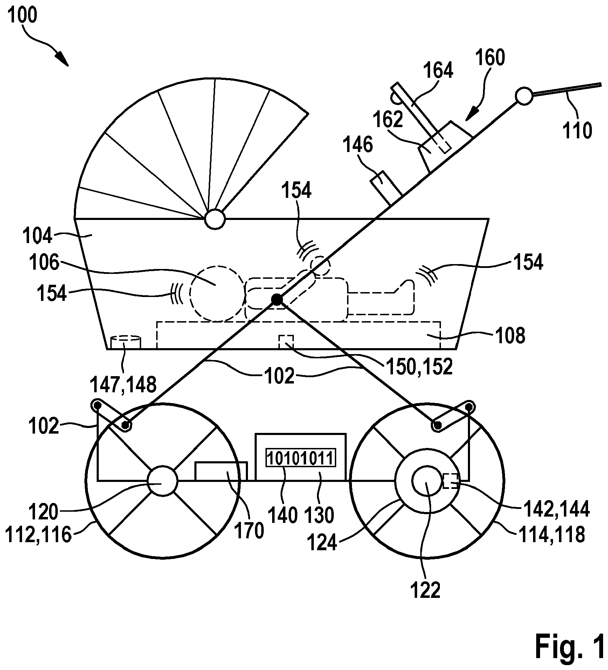

Beschreibung der Ausführungsbeispiele Fig. 1 zeigt einen Kinderwagen 100 mit einem vorzugsweise scherenartig zusammenklappbaren Untergestell 102, auf dem bevorzugt eine Liege- oder Sitzwanne 104 für ein darin aufzunehmendes Kind 106 angeordnet ist. Das Kind 106 liegt vorzugsweise auf einer Matratze 108. An dem Untergestell 102 ist ferner bevorzugt ein üblicherweise höhenverstellbarer U-förmiger Bügel 110 für einen Schiebebetrieb des Kinderwagens 100 durch einen in den Zeichnungen nicht dargestellten Benutzer ausgebildet.

An dem Untergestell 102 sind hier lediglich exemplarisch vier Räder 112, 114, 116, 118 vorgesehen, wobei die hier lediglich sichtbaren Räder 112, 114 die beiden anderen Räder 116, 118 verdecken. Die Räder 112, 116 sind beidseits an einer Vorderachse 120 und die Räder 114, 118 an einer Hinterachse 122 an dem Untergestell 102 des Kinderwagens 100 befestigt. Die beiden Räder 114, 118 an der Hinterachse 122 sind hier lediglich exemplarisch mittels einer elektrischen Antriebseinheit 124 zur zumindest teilweisen Unterstützung des manuellen Schiebebetriebs des Kinderwagens 100 durch den Benutzer antreibbar.

An dem Untergestell 102 ist hier beispielhaft eine elektrische Wiege- und Rütteleinheit 130 befestigt, die zum aktiven Sedieren oder zum Wachrütteln des in der Liege- oder Sitzwanne 104 ruhenden bzw. liegenden Kindes 106 ausgebildet ist, bevorzugt in Abhängigkeit von Sensordaten 140 mindestens eines zum Beispiel dem Rad 114 zugeordneten Sensors 142. Bei dem Sensor 142 kann es sich zum Beispiel um einen Bewegungssensor 144 in der Form eines linearen Beschleunigungssensors, eines Drehbeschleunigungssensors oder dergleichen handeln. Alternativ oder ergänzend kann die Sedierungs- und Wachrüttelfunktion der Wiege- und Rütteleinheit 130 auch durch eine geeignete Ansteuerung der elektrischen Antriebseinheit 124 realisiert sein.

Es wird darauf hingewiesen, dass der Begriff des "Sedierens" im Kontext der vorliegenden Erfindung sowohl ein einfaches Beruhigen, als auch ein schläfrig machen bzw. ein in den Schlaf versetzen des Kindes 106 umfasst.

Mit Hilfe des Bewegungssensors 144 können Bewegungen des Kindes 106 erfasst werden, so dass beim Überschreiten eines vorgegebenen Bewegungsgrenzwerts bzw. Beschleunigungsgrenzwerts der Kinderwagen 100 bzw. die Liege- oder Sitzwanne 104 mittels der Wiege- und Rütteleinheit 130 in eine harmonische Wiegebewegung versetzbar ist, um insbesondere ein Aufwachen des Kindes 106 zu verhindern oder dessen (Wieder-)Einschlafen zu befördern. Weiterhin kann eine elektronische Kamera 146 an dem Untergestell 102 unterhalb des U-förmigen Bügels 110 montiert sein, mittels derer die Bewegungen des Kindes 106 in der Liege- oder Sitzwanne 104 des Kinderwagens 100 optisch erfassbar sind und der Kinderwagen 100 bzw. die Liege- oder Sitzwanne 104 beim Überschreiten eines vorgegebenen visuellen Bewegungsgrenzwerts wiederum mittels der elektrischen Wiege- und Rütteleinheit 130 in eine harmonische Wiegebewegung versetzbar ist.

Darüber hinaus kann bevorzugt im Bereich der Liege- oder Sitzwanne 104 des Kinderwagens 100 mindestens ein Sensor 147 platziert sein, der als ein Gassensor 148 ausgebildet ist. Der Gassensor 148 ist hierbei vorzugsweise zur Erfassung der Kohlendioxidkonzentration innerhalb der Liege- oder Sitzwanne 104 ausgestaltet. Hierdurch kann der Kinderwagen 100 beim Vorliegen eines vorgegebenen kritischen zeitlichen Verlaufs der Kohlendioxidkonzentration mit Hilfe der elektrischen Wiege- und Rütteleinheit 130 automatisch in eine periodische Rüttelbewegung, insbesondere eine vergleichsweise intensive periodische Rüttelbewegung, versetzt werden, um das Kind 106 schnell und zuverlässig aufzuwecken und vor Schädigungen zu schützen. Aufgrund der solchermaßen umgesetzten permanenten und vollautomatischen Atmungsüberwachung des Kindes 106 kann das Risiko für den so genannten "plötzlichen Kindstod" des Kindes 106 zumindest vermindert werden. Im Fall eines etwaigen Versagens der Atmung des Kindes 106 bleibt die Kohlendioxidkonzentration innerhalb der Liege- oder Sitzwanne 104 des Kinderwagens 100 zumindest im Wesentlichen konstant.

Ferner kann innerhalb der Liege- oder Sitzwanne 104 des Kinderwagens 100 im Bereich der Matratze 108 und bevorzugt unterhalb dieser mindestens ein weiterer Sensor 150 positioniert sein, der bevorzugt wiederum als ein Bewegungssensor 152 umgesetzt ist. Infolgedessen ist eine besonders direkte Erfassung von etwaigen Bewegungen des Kindes 106 möglich. Insbesondere durch eine kombinierte Auswertung der von den Bewegungssensoren 144, 152, der elektronischen Kamera 146 sowie von weiteren optionalen - nicht dargestellten - Sensoren gelieferten Sensordaten 140 kann jede noch so geringfügige Bewegung 154 des Kindes 106 bei einer zugleich ausgezeichneten Störsicherheit zuverlässig erfasst werden.

Der Benutzer kann die Wiege- und Rütteleinheit 130 sowie die elektrische Antriebseinheit 124 mittels einer elektronischen Bedieneinheit 160 vollständig kontrollieren, die bevorzugt an dem Untergestell 102 unterhalb des U-förmigen Bügels 110 des Kinderwagens 100 befestigt ist. Zu diesem Zweck empfangen die Wiege- und Rütteleinheit 130 und die elektrische Antriebseinheit 124 von der elektronischen Bedieneinheit 160 entsprechende Stellbefehle.

Die Bedieneinheit 160 ist hier lediglich beispielhaft mittels eines Smartphones 164 realisiert, auf dem eine App(-likation) bzw. ein Anwenderprogramm zur Kontrolle sämtlicher Funktionalitäten des Kinderwagens 100 durch den Benutzer installiert ist und das in einer am Untergestell 102 befestigten Halterung 162 aufnehmbar ist. Das Smartphone 164 ist nach dem Einsetzen in die Halterung 162 vorzugsweise mit dieser verriegelbar und im Bedarfsfall nach dem Lösen der Verriegelung durch den Benutzer wieder aus der Halterung 162 entnehmbar. Anstelle der elektronischen Kamera 146 kann die optische Bewegungskontrolle des Kindes 106 auch durch eine der besseren zeichnerischen Übersicht halber hier nicht bezeichnete, üblicherweise in das Smartphone 164 integrierte Kamera erfolgen. Weiterhin verfügt der Kinderwagen 100 über einen Akkupack 170, der zur Versorgung der elektrischen Antriebseinheit 124, der Wiege- und Rütteleinheit 130 sowie gegebenenfalls auch der Bedieneinheit 160, falls diese nicht wie ein Smartphone über eine eigene Energieversorgung verfügt, mit der notwendigen elektrischen Energie dient. Die elektrische Antriebseinheit 124 kann gegebenenfalls zur Verlängerung der Akkulaufzeit auch in einen Rekuperationsbetrieb schaltbar sein.

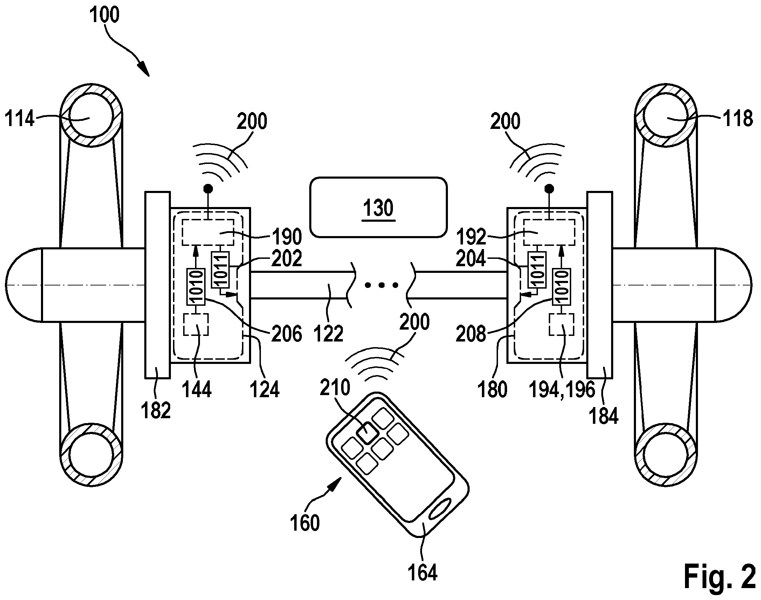

Fig. 2 zeigt die Hinterachse 122 des Kinderwagens 100 von Fig. 1, an der die beiden Räder 114, 118 angeordnet, wobei dem Rad 114 die elektrische Antriebseinheit 124 und dem Rad 118 beispielhaft eine weitere elektrische Antriebseinheit 180 zum drehenden Antrieb zugeordnet ist. Grundsätzlich ist die Antriebseinheit 124 für den zumindest teilweise elektrisch unterstützten Schiebebetrieb und den automatischen Wiege- und Rüttelbetrieb des Kinderwagens 100 ausreichend, wobei gegebenenfalls ein Differential vorzusehen ist, um das Kurvenfahren mit dem Kinderwagen 100 zu erleichtern. Mit den beiden Antriebseinheiten 124, 180 kann das Kurvenfahren durch eine entsprechende Ansteuerung aktiv unterstützt werden, in dem die Drehzahl der jeweils im Bereich des größeren Kurvenradius befindlichen Antriebseinheit 124, 180 erhöht wird.

Für den Fall, dass der Kinderwagen 100 lediglich drei Räder aufweist, ist die Antriebseinheit 124 bevorzugt dem in der Regel in die Fahrtrichtung weisenden Einzelrad zugeordnet. Zum sicheren Verzögern sowie als Wegrollsicherung beim Abstellen bzw. Parken des Kinderwagens 100 ist den elektrischen Antriebseinheiten 124, 180 bevorzugt jeweils eine Bremseinheit 182, 184 zugeordnet. Zudem kann die separate Wiege- und Rütteleinheit 130 von Fig. 1 entfallen, wenn deren Funktion durch die Antriebseinheiten 124, 180 mit übernommen wird. Dies kann beispielsweise durch eine periodische Drehrichtungsumkehr der beiden Antriebseinheiten 124, 180 mit einer Frequenz erfolgen, die bevorzugt im Bereich einer Eigenfrequenz des Kinderwagens 100 liegt. Im Wiegebetrieb erfolgen langsame harmonische Drehrichtungswechsel mit flach ansteigenden und abfallenden Drehzahlrampen der Antriebseinheiten 124, 180, während im Rüttelbetrieb kurzfristige, abrupte Drehrichtungswechsel mit deutlich steileren Drehzahlrampen vollzogen werden, die zu höheren Schwingungsamplituden führen.

Jedem Rad 114, 118 der Hinterachse 122 ist ferner jeweils eine Funkeinheit 190, 192 zugeordnet, wobei die Funkeinheit 190 hier lediglich exemplarisch mit dem Sensor 144 von Fig. 1 und die Funkeinheit 192 mit einem weiteren Sensor 194, der hier beispielhaft ein Bewegungssensor 196 ist, zusammenwirkt. Die zwei Funkeinheiten 190, 192 sind bevorzugt zur bidirektionalen Kommunikation über den drahtlosen bidirektionalen Kommunikationsweg 200 mit der Bedieneinheit 160 ausgebildet, deren technische Umsetzung hier mit dem Smartphone 164 realisiert ist. Zwischen der Bedieneinheit 160 und den beiden elektrischen Antriebseinheiten 124, 180 erfolgt mit Hilfe der Funkeinheiten 190, 192 vorzugsweise zumindest eine Übertragung von Stellbefehlen 202, 204 und zwischen den Bewegungssensoren 144, 194 und der Bedieneinheit 160 vollzieht sich zudem bevorzugt ein Austausch von allen Sensordaten 206, 208 der Bewegungssensoren 144, 194. Auf dem Smartphone 164 ist bevorzugt eine Applikation 210 installiert, mittels der sich die gesamte Funktionalität des Kinderwagens 100 vom Benutzer softwaretechnisch steuern bzw. kontrollieren lässt.

Meldet beispielsweise einer der beiden Bewegungssensoren 144, 196 eine erhöhte Bewegungsaktivität des im Kinderwagen 100 ruhenden Kindes, so werden die entsprechenden Sensordaten 206, 208 bevorzugt mit Hilfe der beiden Funkeinheiten 190, 192 über den drahtlosen bidirektionalen Kommunikationsweg 200 an das Smartphone 164 transferiert und dort von der Applikation 210 mittels geeigneter Algorithmen ausgewertet. Die solchermaßen von der Applikation 210 ermittelten Stellbefehle 202, 204 für die beiden Antriebseinheiten 124, 180 werden vorzugsweise wiederum über den drahtlosen bidirektionalen Kommunikationsweg 200 vom Smartphone 164 an die beiden Funkeinheiten 190, 192 zurück übertragen und von diesen an die beiden elektrischen Antriebseinheiten 124, 180 weitergeleitet.

## Patentansprüche

1. Kinderwagen (100) mit einem Untergestell (102), auf dem eine Liege- oder Sitzwanne (104) für ein Kind (106) angeordnet ist, und mit mindestens drei an dem Untergestell (102) angeordneten Rädern (112, 114, 116, 118), wobei zumindest ein Rad (112, 114, 116, 118) mittels einer elektrischen Antriebseinheit (124, 180) zur zumindest teilweisen Unterstützung eines manuellen Schiebebetriebs des Kinderwagens (100) durch einen Benutzer antreibbar ist, und wobei die elektrische Antriebseinheit (124, 180) mittels einer Bedieneinheit (160) kontrollierbar ist, **dadurch gekennzeichnet, dass** eine elektrische Wiege- und Rütteleinheit (130) zum Sedieren und zum Wachrütteln eines in der Liege- oder Sitzwanne (104) aufgenommenen Kindes (106) in Abhängigkeit von Sensordaten (140, 206, 208) mindestens eines zugeordneten Sensors (142, 147, 150, 194) ausgebildet ist.

2. Kinderwagen nach Anspruch 1, **dadurch gekennzeichnet, dass** zumindest einem Rad (112, 114, 116, 118) mindestens ein Bewegungssensor (144, 152, 196) sowie eine Funkeinheit (190, 192) zugeordnet sind.

3. Kinderwagen nach Anspruch 2, **dadurch gekennzeichnet, dass** die mindestens eine Funkeinheit (190, 192) zur bidirektionalen Kommunikation mit der Bedieneinheit (160) ausgebildet ist, um zwischen der Bedieneinheit (160) und der elektrischen Antriebseinheit (124, 180) zumindest eine Übertragung von Stellbefehlen (202, 204) und zwischen dem mindestens einen Bewegungssensor (144, 152, 196) und der Bedieneinheit (160) zumindest eine Übertragung von Sensordaten (140, 206, 208) zu ermöglichen.

4. Kinderwagen nach Anspruch 3, **dadurch gekennzeichnet, dass** mindestens zwei Räder (112, 114, 116, 118) einer Vorderachse (120) und/oder einer Hinterachse (122) jeweils eine zugeordnete elektrische Antriebseinheit (124, 180) und mindestens einen Bewegungssensor (144, 152, 196) sowie eine Funkeinheit (190, 192) aufweisen.

5. Kinderwagen nach einem der vorhergehenden Ansprüche, **dadurch gekennzeichnet, dass** der mindestens eine zugeordnete Sensor (142, 150, 194) ein Bewegungssensor (144, 152, 196) ist.

6. Kinderwagen nach einem der vorhergehenden Ansprüche, **dadurch gekennzeichnet, dass** mittels des mindestens einen zugeordneten Sensors (142, 150, 194) Bewegungen (154) eines in der Liege- oder Sitzwanne (104) aufgenommenen Kindes (106) detektierbar sind und der Kinderwagen (100) beim Überschreiten eines vorgegebenen Bewegungsgrenzwerts mittels der elektrischen Wiege- und Rütteleinheit (130) in eine harmonische Wiegebewegung versetzbar ist.

7. Kinderwagen nach einem der vorhergehenden Ansprüche, **dadurch gekennzeichnet, dass** mittels einer elektronischen Kamera (146) Bewegungen (154) eines in der Liege- oder Sitzwanne (104) aufgenommenen Kindes (106) optisch erkennbar sind und der Kinderwagen (100) beim Überschreiten eines vorgegebenen Bewegungsgrenzwerts mittels der elektrischen Wiege- und Rütteleinheit (130) in eine harmonische Wiegebewegung versetzbar ist.

8. Kinderwagen nach einem der vorhergehenden Ansprüche, **dadurch gekennzeichnet, dass** mindestens ein zugeordneter Sensor (147) ein im Bereich der Liege- oder Sitzwanne (104) positionierter Gassensor (148) ist.

9. Kinderwagen nach Anspruch 8, **dadurch gekennzeichnet, dass** mittels des Gassensors (148) eine Kohlendioxidkonzentration im Bereich der Liege- oder Sitzwanne (104) erfassbar ist und der Kinderwagen (100) beim Erfassen eines vorgegebenen Verlaufs der Kohlendioxidkonzentration mittels der elektrischen Wiege- und Rütteleinheit (130) in eine periodische Rüttelbewegung versetzbar ist.

10. Kinderwagen nach einem der vorhergehenden Ansprüche, **dadurch gekennzeichnet, dass** die Bedieneinheit (160) ein Smartphone (164) ist.

11. Kinderwagen nach einem der vorhergehenden Ansprüche, **dadurch gekennzeichnet, dass** eine harmonische Wiegebewegung durch eine periodische Drehrichtungsumkehr im Bereich einer Eigenfrequenz des Kinderwagens (100) mittels der elektrischen Wiege- und Rütteleinheit (130) erzeugbar ist.

12. Kinderwagen nach einem der vorhergehenden Ansprüche, **dadurch gekennzeichnet, dass** die elektrische Antriebseinheit (124, 180) die elektrische Wiege- und Rütteleinheit (130) ausbildet.

## Claims

1. Baby carriage (100) having an underframe (102) on which a recliner or seat shell (104) for a child (106) is arranged, and having at least three wheels (112, 114, 116, 118) arranged on the underframe (102), wherein at least one wheel (112, 114, 116, 118) can be driven by means of an electric drive unit (124, 180) for at least partially assisting manual pushing of the baby carriage (100) by a user, and wherein the electric drive unit (124, 180) can be controlled by means of an operator control unit (160), **characterized in that** an electrical rocking and vibrating unit (130) is formed for soothing and rousing a child (106) held in the recliner or seat shell (104) as a function of sensor data (140, 206, 208) from at least one associated sensor (142, 147, 150, 194).

2. Baby carriage according to Claim 1, **characterized in that** at least one motion sensor (144, 152, 196) and one radio unit (190, 192) are associated with at least one wheel (112, 114, 116, 118).

3. Baby carriage according to Claim 2, **characterized in that** the at least one radio unit (190, 192) is designed for bidirectional communication with the operator control unit (160) in order to allow at least transmission of actuating commands (202, 204) between the operator control unit (160) and the electric drive unit (124, 180) and at least transmission of sensor data (140, 206, 208) between the at least one motion sensor (144, 152, 196) and the operator control unit (160).

4. Baby carriage according to Claim 3, **characterized in that** at least two wheels (112, 114, 116, 180) of a front axle (120) and/or a rear axle (122) each have an associated electric drive unit (124, 180) and at least one motion sensor (144, 152, 196) and one radio unit (190, 192).

5. Baby carriage according to one of the preceding claims, **characterized in that** the at least one associated sensor (142, 150, 194) is a motion sensor (144, 152, 196) .

6. Baby carriage according to one of the preceding claims, **characterized in that** movements (154) by a child (106) held in the recliner or seat shell (104) can be detected by means of the at least one associated sensor (142, 150, 194) and the baby carriage (100) can be set in harmonic rocking motion by means of the electrical rocking and vibrating unit (130) when a specified movement limit value and is exceeded.

7. Baby carriage according to one of the preceding claims, **characterized in that** movements (154) by a child (106) held in the recliner or seat shell (104) can be visually identified by means of an electronic camera (146) and the baby carriage (100) can be set in harmonic rocking motion by means of the electrical rocking and vibrating unit (130) when a specified movement limit value is exceeded.

8. Baby carriage according to one of the preceding claims, **characterized in that** at least one associated sensor (147) is a gas sensor (148) positioned in the region of the recliner or seat shell (104).

9. Baby carriage according to Claim 8, **characterized in that** a concentration of carbon dioxide in the region of the recliner or seat shell (104) can be sensed by means of the gas sensor (148) and the baby carriage (100) can be set in periodic vibrating motion by means of the electrical rocking and vibrating unit (130) when a specified profile of the concentration of carbon dioxide is sensed.

10. Baby carriage according to one of the preceding claims, **characterized in that** the operator control unit (160) is a smartphone (164).

11. Baby carriage according to one of the preceding claims, **characterized in that** a harmonic rocking motion can be generated by means of the electrical rocking and vibrating unit (130) by periodically reversing the direction of rotation in the region of a natural frequency of the baby carriage (100).

12. Baby carriage according to one of the preceding claims, **characterized in that** the electric drive unit (124, 180) forms the electrical rocking and vibrating unit (130).

## Revendications

1. Poussette (100) comprenant un cadre inférieur (102) sur lequel est agencé un bac de couchage ou d'assise (104) pour un enfant (106), et comprenant au moins trois roues (112, 114, 116, 118) agencées sur le cadre inférieur (102), au moins une roue (112, 114, 116, 118) pouvant être entraînée au moyen d'une unité d'entraînement électrique (124, 180) pour soutenir au moins partiellement une opération de poussée manuelle de la poussette (100) par un utilisateur, et l'unité d'entraînement électrique (124, 180) pouvant être contrôlée au moyen d'une unité de commande (160), **caractérisée en ce qu'**une unité de bercement et de vibration électrique (130) est configurée pour endormir et pour réveiller un enfant (106) placé dans le bac de couchage ou d'assise (104) en fonction de données de capteur (140, 206, 208) d'au moins un capteur associé (142, 147, 150, 194).

2. Poussette selon la revendication 1, **caractérisée en ce qu'**au moins une roue (112, 114, 116, 118) est associée à au moins un capteur de mouvement (144, 152, 196) ainsi qu'à une unité radio (190, 192).

3. Poussette selon la revendication 2, **caractérisée en ce que** l'au moins une unité radio (190, 192) est configurée pour une communication bidirectionnelle avec l'unité de commande (160), afin de permettre entre l'unité de commande (160) et l'unité d'entraînement électrique (124, 180) au moins une transmission de commandes de réglage (202, 204) et entre l'au moins un capteur de mouvement (144, 152, 196) et l'unité de commande (160) au moins une transmission de données de capteur (140, 206, 208).

4. Poussette selon la revendication 3, **caractérisée en ce qu'**au moins deux roues (112, 114, 116, 118) d'un essieu avant (120) et/ou d'un essieu arrière (122) présentent chacune une unité d'entraînement électrique associée (124, 180) et au moins un capteur de mouvement (144, 152, 196), ainsi qu'une unité radio (190, 192).

5. Poussette selon l'une quelconque des revendications précédentes, **caractérisée en ce que** l'au moins un capteur associé (142, 150, 194) est un capteur de mouvement (144, 152, 196).

6. Poussette selon l'une quelconque des revendications précédentes, **caractérisée en ce qu'**au moyen de l'au moins un capteur associé (142, 150, 194), des mouvements (154) d'un enfant (106) placé dans le bac de couchage ou d'assise (104) peuvent être détectés et la poussette (100) peut être mise en mouvement de bercement harmonieux au moyen de l'unité de bercement et de vibration électrique (130) lors du dépassement d'une valeur limite de mouvement prédéterminée.

7. Poussette selon l'une quelconque des revendications précédentes, **caractérisée en ce qu'**au moyen d'une caméra électronique (146), des mouvements (154) d'un enfant (106) placé dans le bac de couchage ou d'assise (104) peuvent être détectés visuellement et la poussette (100) peut être mise en mouvement de bercement harmonieux au moyen de l'unité de bercement et de vibration électrique (130) lors du dépassement d'une valeur limite de mouvement prédéterminée.

8. Poussette selon l'une quelconque des revendications précédentes, **caractérisée en ce qu'**au moins un capteur associé (147) est un capteur de gaz (148) positionné dans la zone du bac de couchage ou d'assise (104).

9. Poussette selon la revendication 8, **caractérisée en ce qu'**au moyen du capteur de gaz (148), une concentration de dioxyde de carbone dans la zone du bac de couchage ou d'assise (104) peut être détectée et la poussette (100) peut être mise en mouvement de vibration périodique au moyen de l'unité de bercement et de vibration électrique (130) lors de la détection d'une évolution prédéfinie de la concentration de dioxyde de carbone.

10. Poussette selon l'une quelconque des revendications précédentes, **caractérisée en ce que** l'unité de commande (160) est un smartphone (164).

11. Poussette selon l'une quelconque des revendications précédentes, **caractérisée en ce qu'**un mouvement de bercement harmonieux peut être généré par une inversion périodique de la direction de rotation dans la plage d'une fréquence propre de la poussette (100) au moyen de l'unité de bercement et de vibration électrique (130).

12. Poussette selon l'une quelconque des revendications précédentes, **caractérisée en ce que** l'unité d'entraînement électrique (124, 180) forme l'unité de bercement et de vibration électrique (130).
